# EUROPÄISCHE PATENTSCHRIFT

(11) **EP 4 204 430 B1**
(45) Veröffentlichungstag und Bekanntmachung des Hinweises auf die Patenterteilung: **15.05.2024**
(21) Anmeldenummer: 21769331.6
(22) Anmeldetag: 26.08.2021
(51) Int. Cl.: C07G 1/00

(54) **VERFAHREN ZUR ABTRENNUNG VON LIGNIN AUS SCHWARZLAUGE**
PROCESS FOR SEPARATING LIGNIN FROM BLACK LIQUOR
PROCÉDÉ DE SÉPARATION DE LIGNINE À PARTIR DE LIQUEUR NOIRE

(30) Priorität: 27.08.2020 AT 507252020
(43) Veröffentlichungstag der Anmeldung: 05.07.2023
(73) Patentinhaber: Mondi AG, 1030 Wien (AT)
(72) Erfinder: PICHLER, Thomas, 8424 Gabersdorf (AT); SIEBENHOFER, Matthäus, 8042 Graz (AT); KIENBERGER, Marlene, 8041 Graz (AT)
(74) Vertreter: Cunow, Gerda
(86) Internationale Anmeldenummer: PCT/AT2021/060298
(87) Internationale Veröffentlichungsnummer: WO 2022/040715

(56) Entgegenhaltungen:
- WO-A1-2018/115592
- WO-A1-2021/154143

## Beschreibung

Die vorliegende Erfindung bezieht sich auf ein Verfahren zur Abtrennung von Lignin und flüchtigen Reaktionsprodukten, wie DMS von aus einer Zellstoffproduktion stammenden Schwarzlauge, bei welchem in einem Wärmebehandlungsreaktor in der Schwarzlauge enthaltenes Lignin demethyliert wird und von dem Lignin abgetrennte CH₃⁺ Ionen mit reduzierten schwefelhaltigen Komponenten aus in der Schwarzlauge enthaltenen Kochchemikalien zu DMS umgesetzt werden und DMS aus dem Wärmebehandlungsreaktor abgezogen wird.

Verfahren zum Abtrennen von Lignin aus Schwarzlauge mittels Fällung desselben sind aus einer Vielzahl von Dokumenten bekannt. Von diesen beschriebenen Verfahren sind das Ligno-Boost-Verfahren und das Ligno-Force-Verfahren die bekanntesten. Bei diesen Verfahren wird Lignin aus Schwarzlauge ausgefällt und eine Modifikation des Lignins vor der Fällung erfolgt bei diesen Verfahren nicht. Auch sind in der Literatur, wie beispielsweise der CA 2,839,864 A1 zweistufige Fällungsverfahren beschrieben, bei welchen die tatsächliche Ausfällung von Lignin erst in der zweiten Stufe stattfindet. In der ersten Stufe wird die nicht behandelte, ursprüngliche Schwarzlauge für die nachfolgende Fällung konditioniert.

Weiterhin ist es aus der Literatur bekannt, dass bei einer Wärmebehandlung von Schwarzlauge, insbesondere bei Temperaturen von bis zu 170 °C die Viskosität der Schwarzlauge absinkt und dieses Absinken der Viskosität, insbesondere die Filtration des ausgefällten Lignins verbessert. Hierbei wird die Reduktion der Viskosität und auch die verbesserte Filtrierbarkeit durch eine Reduktion des Gehalts an verbliebener Hemizellulose bewirkt und weiterhin durch ein Absinken der Molmasse des Lignins. Eine Verringerung der Molmasse von Lignin bei der Wärmebehandlung oder durch Abbau größerer Makromoleküle ist ein wünschenswerter Schritt, da einerseits durch Abbau von Makromolekülen Ligninpolymere erhalten werden, die einer gewünschten Phenolform stärker als die Ausgangsmakromoleküle ähneln und andererseits bei der Wärmebehandlung bis zu einem gewissen Grad eine Demethylierung von Lignin stattfindet und die CH₃⁺ Einheit der Methoxylgruppen von Lignin mit reduzierten schwefelhaltigen Komponenten, wie z.B. HS⁻ Ionen der Kochchemikalien reagiert und Dimethylsulfid als ein Hauptprodukt ausbildet. Die entstehende demethylierte Form von Lignin ist insbesondere zur Anwendung in Phenolformaldehydharzen geeignet, da eine derartige Form von demethylierten Lignin eine erhöhte Reaktivität aufweist und somit eine Reaktion von Lignin mit Formaldehyd begünstigt wird, so dass eine Substitution von Phenol in Phenolformaldehydharzen möglich wird.

Schließlich wurde in der WO 2018/115592 A1 ein Verfahren für das Demethylieren und Ausfällen von Lignin beschrieben, bei welchem aufgrund der Säurebildung während der Wärmebehandlung gleichzeitig eine Demethylierung und Ausfällung stattfindet. In diesem Verfahren wird vor der Wärmebehandlung ein pH-Einstellungsschritt vorgenommen, um auf diese Weise möglichst rasch und vollständig Lignin aus der Lösung ausfällen zu können.

Der WO 2021/154143 A1 ist ein Behandeln eines gemischtes Stroms, der aus einer Zersetzung oder Umwandlung von Holzstoff erhalten wurden, beschrieben, welches Verfahren eine oder mehrere Behandlungseinheiten umfasst, die angeordnet sind, um wenigstens eine erste Komponente von den anderen Komponenten in den Materialstrom und aus einem ersten Produktstrom enthaltend diese erste Komponente abzuziehen, wodurch die Reinheit einer zweiten, in dem Massestrom enthaltenen Komponente angereichert wird.

Trotz dieser Vielzahl von verschiedenen bekannten Verfahren, mit welchen Lignin aus Schwarzlauge ausgefällt bzw. entfernt werden kann und den verschiedensten Behandlungsmethoden zur Verbesserung der Eigenschaften dieses Lignins sind die in der Schwarzlauge verbliebenen Reste an Lignin bei all diesen Verfahren immer sehr groß und überdies geschieht bei den meisten bekannten Verfahren eine Ausfällung von Lignin während der Schwarzlaugebehandlung, was die Verfahrensführung nicht erleichtert aufgrund der in diesem Fall erforderlichen, nachfolgenden Abtrennung und schwierigen bzw. aufwändigen Reinigung des gewünschten Produkts.

Die vorliegende Erfindung zielt nun darauf ab, ein Verfahren zur Verfügung zu stellen, mit welchem es einerseits gelingt, die Dimethylsulfidabtrennung aus Schwarzlauge zu optimieren und zur gleichen Zeit einen möglichst hohen Anteil des Lignins aus der Schwarzlauge auszufällen und hierbei ein Lignin aus dem Prozess zu gewinnen, welches eine möglichst niedrige Molmasse und einen möglichst geringen Gehalt an Methoxylgruppen aufweist und somit in einer Vielzahl von Verfahren unmittelbar und mit gutem Erfolg eingesetzt werden kann.

Zur Lösung dieser Aufgabe ist das erfindungsgemäße Verfahren im Wesentlichen dadurch gekennzeichnet, dass ein Druckanstieg in dem Wärmebehandlungsreaktor kontrolliert wird und DMS sowie gegebenenfalls weitere flüchtige Reaktionsprodukte bei Erreichen eines Drucks von ≥ 15 Bar bis ≤ 40 Bar, vorzugsweise ≤ 30 Bar in dem Wärmebehandlungsreaktor aus diesem gegebenenfalls wiederholt abgezogen werden, dass die an DMS sowie gegebenenfalls weiteren flüchtigen Reaktionsprodukten verarmte Schwarzlauge in eine erste Fällungsstufe überführt wird und mit CO₂ und/oder Abgasen aus beispielsweise einem Rückgewinnungsreaktor oder einem Kalkofen zur Ausfällung eines demethyliertes Lignin enthaltenden Schlamms beaufschlagt wird, dass der demethyliertes Lignin enthaltende Schlamm in einer zweiten Fällungsstufe mit wenigstens einem schwefelhaltigen Ansäuerungsmittel versetzt wird und dass der ausgefälltes rohes demethyliertes Lignin enthaltende Schlamm aus der zweiten Fällungsstufe ausgetragen und einer Abtrennung von demethyliertem Lignin zugeführt wird sowie wenigstens ein Teil der abgezogenen weiteren flüchtigen Reaktionsprodukte, insbesondere schwefelhaltigen Reaktionsprodukte in das Verfahren rückgeführt werden. Dadurch dass ein Druckanstieg in dem Wärmebehandlungsreaktor kontrolliert wird und indem es gegebenenfalls weitere flüchtige Reaktionsprodukte zumindest nach Erreichen eines Drucks von ≥ 15 Bar bis ≤ 40 Bar, vorzugsweise ≤ 30 Bar in einem Wärmebehandlungsreaktor aus diesem abgezogen werden, gelingt es, das Reaktionsgleichgewicht der Demethylierung von Lignin in dem Wärmebehandlungsreaktor so weit zu verschieben, dass die Reaktion so lange erfolgt, solange noch nicht demethyliertes Lignin und Schwefel, der aus der Zellstoffherstellung stammt, für eine Reaktion zu DMS verfügbar ist, zu verschieben. Bei dem Verfahren gemäß dem Stand der Technik, bei welchem zumindest nach einer bestimmten Druckerhöhung stattfindendes Abziehen von DMS nicht erfolgt und somit ein unkontrollierter Druckanstieg in dem Reaktor nicht vermieden wird, verbinden sich Lignineinheiten bei einem spontanen Abziehen von DMS wiederum zu größeren Einheiten und das Molekulargewicht von Lignin steigt in nicht erwünschter Weise an. Wenn, wie im vorliegenden Verfahren das gebildete DMS zumindest wiederholt nach Erreichen eines gewissen Druckanstiegs abgezogen wird und ein unkontrollierter Druckanstieg vermieden wird, gelingt es, das Reaktionsgleichgewicht zu verschieben und die Reaktion solange am Laufen zu halten, solange noch Lignin, welches zur Reaktion befähigte Methoxylgruppen aufweist, vorhanden ist. Weiterhin gelingt es mit dieser Verfahrensführung nicht nur Lignin zu demethylieren sondern vor allem das Molekulargewicht von Lignin niedrig zu halten bzw. sogar gegenüber jedem des Ausgangsmaterials herabzusetzen. Dadurch, dass nachfolgend die an DMS, wie gegebenenfalls weiteren flüchtigen Reaktionsprodukten verarmte Schwarzlauge in eine erste Fällungsstufe überführt wird, und mit CO₂ und/oder schwefelhaltigen Reaktionsprodukten zur Ausfüllung eines demethylierten Lignin enthaltenen Schlamms beaufschlagt wird, gelingt es, einen Schlamm zu erhalten, welcher überraschenderweise ein Lignin enthält, das in Bezug auf unbehandeltes Lignin bei konventioneller Fällung eine deutlich niedriger Molmasse aufweist.

im Zusammenhang mit der vorliegenden Erfindung werden Rektionsprodukte aus dem Wärmebehandlungsreaktor abgezogen, wenn ein Druck zwischen etwa 15 Bar, wie ≥ 15 Bar und etwa 40 Bar, wie ≤ 30 Bar erreicht wird. Diese Drücke sind hierbei so gewählt, dass sie in etwa dem Dampfdruck von Wasser bei der im Wärmebehandlungsreaktor vorliegenden Temperatur entsprechen. Der Druck, bei welchem flüchtige bzw. gasförmige Reaktionsprodukte aus dem Wärmebehandlungsreaktor abgezogen werden richtet sich daher nach der in diesem Reaktor gewählten Temperatur und liegt üblicherweise zwischen ≥ 15 Bar und ≤ 40 Bar.

Indem weiterhin während der Verfahrensführung wenigstens ein Teil des DMS sowie der gegebenenfalls abgezogenen, weiteren, flüchtigen Reaktionsprodukte an einer anderen Stelle in das Verfahren rückgeführt werden, gelingt es einerseits, das Reaktionsgleichgewicht in Richtung zu demethyliertem Lignin zu verschieben, so dass die Ausbeute an diesem Produkt maximiert werden kann und andererseits durch diese Verfahrensführung nicht nur eine besonders hohe Ausbeute an demethyliertem Lignin zu erhalten, sondern zusätzlich können überraschenderweise unerwünschte strukturelle Änderungen an dem Lignin während dieser Verfahrensführung hintangehalten werden. Dies insbesondere deshalb, da aufgrund des Hintanhaltens großer Druckänderungen in dem Wärmebehandlungsreaktor eine Ligninkondensation durch üblicherweise bei den während der Wärmebehandlung vorliegenden Temperaturen zusätzlich beobachtet wird hintanzuhalten.

Indem weiterhin wenigstens ein Teil der aus den Fällungsstufen abgezogenen weiteren, flüchtigen Reaktionsprodukte, insbesondere schwefelhaltige Reaktionsprodukte in das Verfahren rückgeführt werden, gelingt es einerseits, für die Ausfällung von Lignin eine milde Ansäuerung durchzuführen, vergleichbar zu jener mit CO₂ und andererseits überraschenderweise eine Ackumulation von Schwefel in dem Verfahren aufgrund des Abziehens von DMS und/oder schwefelhaltiger Gase zu vermeiden. Weiterhin wird bei einer derartigen Verfahrensführung ein Lignin mit einer niedrigeren Molmasse im Vergleich zu herkömmlichen Verfahren erhalten.

Weiterhin kann die Verfahrensführung so gewählt werden, dass Schwarzlauge mit einem basischen pH-Wert zwischen pH 13,8 und 12,8 eingesetzt wird und dass der pH-Wert in jeder Fällungsstufe in Bezug auf den vorherigen Verfahrensschritt abgesenkt wird. Indem in jeder Fällungsstufe der pH-Wert gegenüber der vorherigen Verfahrensstufe gesenkt, was zu einer milden Ansäuerung führt. Ein Absenken des pH-Werts im Bereich von etwa 1,2 bis 2,0 in Bezug auf den vorherigen Verfahrensschritt erscheint besonders günstig. Weiterhin hat sich gezeigt, dass je weiter der pH-Wert abgesenkt wird, desto mehr Lignin kann gefällt werden und insbesondere desto mehr Lignin mit niedrigem Molekulargewicht kann ausgefällt werden. Eine derartige Verfahrensführung verbessert somit insgesamt die Ausbeute an niedermolekularem demethyliertem Lignin gegenüber herkömmlichen Verfahren deutlich.

Mit herkömmlichen Verfahren zur Fällung von Lignin aus Schwarzlauge mit CO₂ kann nur ein Teil des Lignins ausgefällt werden. Die bekannte Verwendung von insbesondere schwefelhaltigen Mineralsäuren zur Ligninfällung ist bei den Verfahren gemäß dem Stand der Technik nicht möglich, da es hierbei zu einer übermäßigen Akkumulation von Schwefelionen in dem Rezyklierverfahren kommt. Erst durch das Abziehen von flüchtigen Reaktionsprodukten, insbesondere von schwefelhaltigen Reaktionsprodukten, wie DMS ist der Einsatz von schwefelhaltigen Mineralsäuren in einer zweiten Fällungsstufe zur Ausfällung von Lignin aus Schwarzlauge möglich geworden. Dieses Abziehen der schwefelhaltigen Reaktionsprodukte z.B. DMS begünstigt nun überraschenderweise die Bildung von Lignin mit niedrigeren Molekulargewichten. Wenn nun der pH-Wert in der zweiten Fällungsstufe gegenüber jenem in der ersten Fällungsstufe weiter abgesenkt wird, wird die Ausfällung von eben diesem überraschenderweise gebildeten Lignin mit niedrigem Molekulargewicht begünstigt, da dieses bei höheren pH-Werten in Lösung verbleibt und nicht ausgefällt werden kann.

Gemäß einer Weiterbildung der Erfindung wird das Verfahren so geführt, dass die flüchtigen Reaktionsprodukte der Wärmebehandlung, insbesondere DMS, kontinuierlich aus der Wärmebehandlung abgezogen werden. Durch ein kontinuierliches Abziehen von insbesondere DMS aus der Wärmebehandlung kann einerseits eine Drucksteigerung, wie beschrieben, vermieden werden, andererseits die beschriebene Verschiebung des Reaktionsgleichgewichts in Richtung zu demethyliertem Lignin kontinuierlich ohne übermäßige Druck- und Temperaturbelastung in dem Wärmebehandlungsbehälter durchgeführt werden.

Indem, wie dies einer Weiterbildung der Erfindung entspricht, das Verfahren so geführt wird, dass aus dem Wärmebehandlungsreaktor sowie der ersten Fällungsstufe abgezogene Abgase, insbesondere schwefelhaltige Abgase, wie DMS und H₂S nach einer Oxidation als Ansäuerungsmittel der zweiten Fällungsstufe zugeführt werden, wird einerseits eine höhere Ausbeute an niedermolekularem Lignin erreicht und andererseits konnte überraschenderweise gezeigt werden, dass, wenn das Dimethylsulfid kontinuierlich oder regelmäßig aus dem Verfahren abgezogen wird, überraschenderweise, obwohl dies nicht direkt mit dem Abziehen von DMS in Zusammenhang steht, ein weiteres Absenken des pH-Werts bewirkt werden kann und dadurch signifikant die Ausbeute der Ligninfällung erhöht werden, ohne dass ein negativer Einfluss auf das Schwefelgleicligewicht stattfinden würde, da kein zusätzlicher Schwefel dem Verfahren zugesetzt wird, sondern lediglich der Schwefel im Kreislauf geführt wird. Die schwefelhaltigen Abgase, wie DMS oder H₂S, welche entweder während der Wärmebehandlung oder während der Fällung gebildet werden, werden im Zuge einer Oxidation in SO₂ bzw. H₂SO₄ umgewandelt, welche als Ansäuerungsmittel der zweiten Fällungsstufe zugeführt werden können. Eine derartige Verfahrensführung ist deshalb möglich, da einerseits lediglich die Schwefelreduktion in der Schwarzlauge, die aus der DMS Bildung und dem Austrag des DMS stammt, kompensiert wird • und andererseits kann mit einer derartigen Verfahrensführung eine weitere Absenkung des pH-Werts unter den Gleichgewichts-pH des CO₂ in der Schwarzlauge erreicht werden. Durch eine derartige Verfahrensführung wird somit die Ausbeute der Ligninausfällung stark vergrößert, ohne dass gleichzeitig das Schwefelgleichgewicht nachteilig beeinflusst wird. Selbstverständlich könnten, sollte nicht ausreichend SO₂ bzw. H₂SO₄ aus den Abgasen gebildet werden können, diese Säuren auch gesondert zugeführt werden.

In gleicher Weise und wie oben beschrieben, kann das erfindungsgemäße Verfahren dahingehend weitergebildet werden, dass aus der zweiten Fällungsstufe abgezogenes Abgas enthaltend CO₂ und gegebenenfalls H₂S als Ansäuerungsmittel der ersten Fällungsstufe zugeführt wird. Auch in diesem Fall gelingt es aufgrund des gleichzeitigen Abziehens von schwefelhaltigen Abgasen die Gesamtschwefelbilanz im System konstant zu halten.

Indem, wie dies einer Weiterbildung entspricht, das Verfahren so geführt, dass die Demethylierung von Lignin in dem Wärmebehandlungsreaktor bei Temperaturen über 180 °C, vorzugsweise über 200 °C, insbesondere bei oder über 220 °C kontinuierlich durchgeführt wird, gelingt es eine möglichst vollständige Demethylierung des ursprünglich in der Schwarzlauge enthaltenen Lignins durchzuführen, ohne gleichzeitig eine Kondensierung von Lignin zu höhermolekularen Produkten befürchten zu müssen. Bekanntermaßen ist Lignin während einer Wärmebehandlung in einem geschlossenen Reaktor im Gleichgewicht mit den daraus gebildeten gasförmigen Produkten, was einerseits zu einem selbst aufgebauten Druck in dem geschlossenen Behälter führt und andererseits, insbesondere wenn das System geöffnet wird und die Produkte plötzlich entweichen gelassen werden, zu einer Kondensation von Lignin führt. Überraschenderweise hat sich gezeigt, dass trotz der hohen Temperaturen in der Wärmebehandlung bei einer Verfahrensführung, wie im vorliegenden Fall beschrieben, es gelingt, die Kondensation von Lignin zu vermeiden und ein niedermolekulares demethyliertes Lignin bereitzustellen. Dies deshalb, da die flüchtigen Reaktionsprodukte aus der Wärmebehandlung abgezogen werden und zwar, wie beschrieben, entweder kontinuierlich oder mehrfach während einer Wärmebehandlung, so dass sich in dem Wärmebehandlungsbehälter weder ein übermäßig erhöhter Druck ausbilden kann, noch eine Kondensation von Lignin erfolgen kann. Überraschenderweise hat eine derartige Verfahrensführung selbst bei Temperaturen von über 200 °C nicht nur eine ausreichende Demethyiierung von Lignin bereitgestellt, sondern überraschenderweise unerwünschte strukturelle Änderungen des Lignins hintangehalten, welche nicht bzw. nur in sehr geringem Ausmaß auftreten und insbesondere konnte der Polymerisationsgrad der phenolischen Makromoleküle herabgesetzt werden und der Anteil an phenolischen Hydroxylgruppen gesteigert werden, so dass insgesamt die phenolische Struktur des Lignins beibehalten werden konnte.

Indem, wie dies einer Weiterbildung der Erfindung entspricht, die Demethylierung in dem Wärmebehandlungsbehälter mit einer kontinuierlichen Temperaturerhöhung durchgeführt wird, gelingt es noch besser, eine Kondensation des Lignins in dem Wärmebehandlungsbehälter hintanzuhalten und insbesondere ein demethyliertes niedermolekulares Lignin bereitzustellen.

Besonders günstige Ergebnisse können hierbei dadurch erzielt werden, dass die Wärmebehandlung, wie dies einer Weiterbildung der Erfindung entspricht, für eine Zeitdauer wenigstens 30 Minuten, vorzugsweise 1 bis 5 Stunden besonders bevorzugt etwa 90 Minuten durchgeführt wird. Bei einer derartigen Umsetzungszeit kann sichergestellt werden, dass einerseits eine ausreichende Demethylierung des in der Schwarzlauge enthaltenen Lignins erreicht wird und andererseits die Reaktionszeit jedenfalls so kurz gewählt wird, dass eine Kondensation des Lignins hintangehalten werden kann. Insbesondere in Bezug auf die Kondensation von Lignin ist es bevorzugt die Dauer der Wärmebehandlung möglichst kurz zu wählen. Wenn bei einer derartigen Verfahrensführung weiterhin so vorgegangen wird, dass bei der Wärmebehandlung gebildetes DMS sowie gegebenenfalls gebildete weitere flüchtige Reaktionsprodukte kontinuierlich abgezogen werden, wird eine Druckerhöhung in dem Wärmebehandlungsbehälter jedenfalls hintangehalten, da die gebildeten flüchtigen, schwefelhaltigen Gase kontinuierlich abgezogen werden und somit insbesondere das Reaktionsgleichgewicht in Richtung zu dem demethylierten Produkt verschoben wird, so dass Lignin so lange demethyliert wird, solange an dem in der Schwarzlauge enthaltenen rohen Lignin abspaltbare Methylgruppen vorhanden sind. Gleichzeitig gelingt es, unerwünschte strukturelle Änderungen des Lignins hintanzuhalten.

Indem das Verfahren so weitergebildet wird, dass aus der ersten Fällungsstufe abgezogenes H₂S oxidiert wird und bei der Oxidation gebildete Produkte wie H₂SO₄, sowie gegebenenfalls SO₂ sowie CO₂ und H₂O der zweiten Fällungsstufe als Ansäuerungsmittel zugeführt werden, können die in der Wärmebehandlungsstufe ebenso wie in der Fällungsstufe abgezogenen Gase in der Ligninaufbereitung im Kreislauf geführt werden und es kann dadurch sichergestellt werden, dass das Schwefelgleichgewicht in dem System aufrecht erhalten bleibt, d.h. es wird ein übermäßiger Schwefelzusatz vermieden, da nur Schwefel, der bereits in der Schwarzlauge enthalten war, abgezogen wird, beispielsweise als DMS und durch Oxidation in H₂SO₄ oder SO₂ umgewandelt wird und wiederum in das Verfahren eingebracht wird. Auf diese Weise gelingt es, die Schwefelbilanz konstant zu halten.

In gleicher Weise kann mit in der ersten bzw. zweiten Fällungsstufe gebildeten H₂S verfahren werden, welches ebenfalls einer Oxidation zugeführt werden kann und wieder in der Folge in das Verfahren als Ansäuerungsmittel eingebracht werden kann.

Zusätzlich zu der oben überwiegenden beschriebenen kontinuierlichen Verfahrensführung ist es selbstverständlich möglich und von der Erfindung umfasst, das Verfahren auch diskontinuierlich zu führen, wobei anstelle der Durchführung des Verfahrens in gesonderten Behältern die einzelnen Verfahrensschritte in lediglich einem oder auch zwei Behältern durchgeführt werden können, die eine Mehrzahl von Reaktionsschritten durchführen können, wodurch der apparative Aufwand wesentlich herabgesetzt werden kann.

Die Erfindung wird nachfolgend anhand von Figuren und Ausführungsbeispielen näher erläutert. In diesen zeigen:
Fig. 1 ein Verfahrenskonzept zum Demethylieren von Lignin sowie einer zweistufigen Ansäuerung mit schwefelhaltigen Gasen gemäß der Erfindung,
Fig. 2 eine andere Ausbildung eines derartigen Prozesskonzeptes, bei welchem zusätzlich abgezogene, schwefelhaltige Gase einer Oxidation zugeführt werden,
Fig. 3 ein Diagramm, welches das Absenken des pH-Werts bei einer erfindungsgemäßen Verfahrensführung sowohl an einer gemäß der Erfindung wärmebehandelten Schwarzlauge als auch an einer gemäß dem Stand der Technik behandelten Schwarzlauge zeigt, und
Fig. 4 ein Verfahrenskonzept zur diskontinuierlichen Durchführung der Demethylierung von Ligsowie einer zweistufigen Ansäuerung mit schwefelhaltigen Gasen gemäß der Erfindung .

### AusfÜhrungsbeispiele:

### Beispiel 1, Wärmebehandlung und Ligninabtrennung aus Schwarzlauge im Labor, Probe und Maßstab

Einem Wärmebehandlungsreaktor wird ein 1 kg Schwarzlauge (Schwarzlauge I) zugeführt und - die Schwarzlauge I wird für 90 min. bei 220 °C Wärme behandelt. Alle 30 min. wird gebildetes Dimethylsulfid (DMS) aus dem Reaktor abgezogen, wobei darauf geachtet wird, dass der Druck in dem Behälter auf maximal 30 Bar oder darunter gehalten wird. Die im System eingebrachte Schwarzlauge I hatte bei ihrem Eintrag einen pH-Wert von 13 und es konnten bei der Wärmebehandlung aus der Schwarzlauge I 10 g/kg Schwarzlauge DMS gewonnen werden. Nach der Wärmebehandlung kann ein Abkühlen vor der letzten Entfernung von DMS erfolgen. Die nach der Wärmebehandlung erhaltene Schwarzlauge I hatte hierbei einen pH-Wert von 11,3 und wird in eine Fällungsstufe übergeführt, welche Fällung entweder in einem gesonderten Behältnis oder aber in dem Wärmebehandlungsreaktor durchgeführt werden kann. Zur Fällung von Lignin wird in einer ersten Fällungsstufe CO₂ als Ansäuerungsmittel zugesetzt und die gebildete Schwarzlaugenaufschlämmung, die nach dem Zusatz von CO₂ einen pH-Wert von 9,9 aufwies, wurde in eine zweite Fällungsstufe übergeführt, in welcher eine zweite Fällung mit zusätzlichen H₂SO₄ durchgeführt wurde. Die daraus abgezogene Aufschlämmung für Lignin hatte einen pH-Wert von 9,4. In der Folge wurde versucht, entweder Lignin nach der ersten Fällungsstufe mit CO₂ zu ziehen und die Ausbeute zu betrachten sowie die Ausbeute nach Durchführung einer zweiten Fällungsstufe zu untersuchen. Hierbei hat es sich gezeigt, dass die Ligninausbeute mit einfacher CO₂ Fällung 90 g/kg Schwarzlauge I betrug und die Ligninausbeute nach Durchführen eines zweiten Fällungsschritts mit H₂SO₄ 104 g/kg Schwarzlauge I betrug.

Die Versuchsführung von Beispiel 1 wurde wiederholt, wobei anstelle des intermittierenden Abziehens von Dimethylsulfid, Dimethylsulfid kontinuierlich am Kopf des Reaktors abgezogen wurde und das abgezogene Dimethylsulfid einer Oxidation zugeführt wurde, um es zu H₂SO₄ bzw. SO₂ aufzuoxidieren, welches Reaktionsprodukt in dem zweiten Fällungsschritt als Ansäuerungsmittel wieder zugeführt wurde. Bei der kontinuierlichen Verfahrensführung konnte insgesamt eine geringfügige Erhöhung des ausgefällten Lignins am Ende der zweiten Trennstufe beobachtet werden, welche sich auf 107 g/kg Schwarzlauge I belief.

### Beispiel 2:

Indem die Versuchsführung von Beispiel 1 im Wesentlichen beibehalten wird, wurde Schwarzlauge aus einer anderen Zellstoffproduktion, in der Folge Schwarzlauge II genannt, eingesetzt. Die Temperatur im Wärmebehandlungsreaktor betrug 200 °C. Der Druck in dem Wärmebehandlungsreaktor wurde durch intermittierendes Abziehen von flüchtigen Bestandteilen auf 15 Bar gehalten (ohne ein Abziehen der flüchtigen Bestandteile hätte sich ein Druck von 18 Bar eingestellt). Die Ausbeute an DMS lag in diesem Fall bei 4,9 g/kg Schwarzlauge II, welche Ausbeute eine H₂SO₄ Zugabe von mindestens 7,7 g/kg Schwarzlauge II in der Fällungsstufe 2 erlaubt.

### Beispiel 3:

Indem die Versuchsführung von Beispiel 1 im Wesentlichen beibehalten wird, wurde Schwarzlauge aus dem Zellstoffkocher von Beispiel 2 eingesetzt, welche Schwarzlauge jedoch aus einem Aufschluss einer von Beispiel 2 verschiedenen Holzart stammte, in der Folge Schwarzlauge III genannt. Die Temperatur im Wärmebehandlungsreaktor betrug 220 °C. Der Druck in dem Wärmebehandlungsreaktor wurde durch intermittierendes Abziehen von flüchtigen Bestandteilen auf 24 Bar eingestellt (ohne ein Abziehen der flüchtigen Bestandteile hätte sich ein Druck von 40 Bar eingestellt). Die Ausbeute an DMS lag in diesem Fall bei 10,8 g/kg Schwarzlauge III, welche Ausbeute eine H₂SO₄ Zugabe von mindestens 17 g/kg Schwarzlauge III in der Fällungsstufe 2 erlaubt, wobei der Anteil an H₂S nicht mitgerechnet wurde,

Schließlich ist in diesem Zusammenhang noch festzuhalten, dass, wenn H₂SO₄ als Ansäuerungsmittel in der zweiten Stufe zugesetzt wird, der Zusatz der starken Säure zum Freisetzen von CO₂ gemeinsam mit H₂S durch Verschiebung des Karbonatgleichgewiclits führt, wodurch das entsprechende Abgas, nämlich CO₂ und H₂S wiederum im Kreislauf geführt werden kann und beispielsweise der Oxidation zugeführt werden kann, um zu SO₂ bzw. H₂SO₄ oxidiert zu werden. Hier kann auch das gesamte Abgas ohne jede Auftrennung oder Reinigung beispielsweise in die erste Stufe rezykliert werden, dass das in dem Abgas enthaltene CO₂ in der einen hohen pH-Wert aufweisenden Lauge gebunden wird und den pH-Wert senkt und das H₂S als Abgas aus der ersten Stufe abgezogen werden kann und dann entweder zu Säuren oxidiert oder auch verbrannt werden kann. Gegebenenfalls weitere gasförmige Inhaltsstoffe in dem Abgas stören die Reaktion nicht und daher könnte auch das gesamte Abgas im Kreislauf geführt werden.

Schließlich wurde versucht, schwefelhaltige Säure vor der CO₂ Fällung, d.h. der ersten Fällungsstufe zuzuführen, was die Menge an erforderlichem CO₂ als Fällungsmittel reduziert und somit die Karbonatbildung während der Fällung reduziert. Bei dieser Verfahrensführung hat es sich gezeigt, dass diese günstig für die Rückführung der Filtrate nach der Filtration von Lignin ist, da Karbonat aus dem Stand der Technik bekannt ist, Probleme in der Laugeneindampfung mit sich bringen zu können.

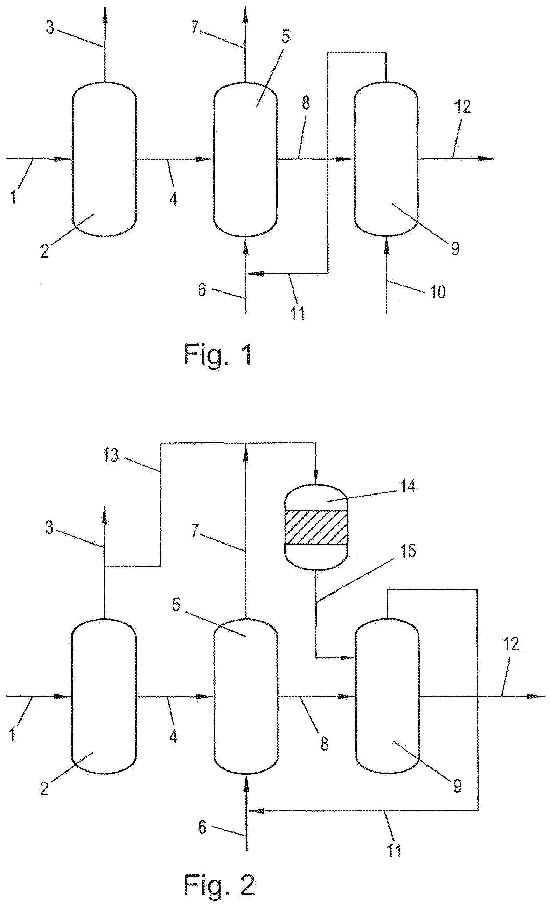

In Fig. 1 ist ein Prozessschema gezeigt, bei welchem das während der Wärmebehandlung gebildete DMS intermittierend abgezogen wird. Hierbei wird bei 1 Schwarzlauge mit einem pH-Wert von 13 in einem Wärmebehandlungsreaktor 2 eingebracht, in welchem die Schwarzlauge bei Temperaturen bis 220 °C für einen Zeitraum von zwischen 0,5 und 4 Stunden erhitzt wird. Das gebildete DMS wird bei 3 jedes Mal abgezogen, wenn der Druck in dem Wärmebehandlungsreaktor 2 den bei der vorliegenden Temperatur, 220 °C, entsprechenden Dampfdruck von Wasser übersteigt, ohne dieses jedoch zu verdampfen. Am Ende der Reaktionszeit wird die behandelte Schwarzlauge, welche nunmehr einen pH-Wert von 11,3 aufweist, über Leitung 4 in eine erste Fällungsstufe 5 übergeführt, wobei in diese zusätzlich ein Abgas oder CO₂ als Reingas über Leitung 6 eingebracht wird, um den pH-Wert abzusenken und das Fällen von Lignin zu erleichtern. Das bei diesem ersten Fällen gebildete H₂S wird am Kopf des Fällungsreaktors über - Leitung 7 ausgetragen und die gebildete, ligninhaltige, insbesondere demethylierte Lignin enthaltende Aufschlämmung wird nunmehr mit einem pH-Wert von 9,9 über Leitung 8 in eine zweite Fällungsstufe 9 eingebracht, in welcher mit einer über Leitung 10 eingetragenen starken Mineralsäure, wie H₂SO₄ oder SO₂ eine weitere Fällung durchgeführt wird. Das bei dieser Fällung gebildete Abgas, nämlich H₂S und CO₂ kann über Leitung 11 in die ersten Fällungsstufe als Ansäuerungsgas rückgeführt werden. Die in der zweiten Fällungsstufe 9 gebildete Aufschlämmung, welche nunmehr einen pH-Wert von 9,4 hat, wird bei 12 einer Ligninabtrennung zugeführt. Bei dieser Verfahrensführung hat es sich gezeigt, dass die Ausbeute von demethyiiertem Lignin in Bezug auf das Verfahren gemäß dem Stand der Technik um wenigstens 30 % erhöht werden konnte und dass sowohl die Schwefelbilanz im System konstant gehalten werden konnte, jedoch das Reaktionsgleichgewicht in Richtung zu demethyliertem Lignin verlagert wurde, so dass ein niedermolekulares, nicht kondensiertes Produkt erhalten wurde, welches in einem weiteren Verfahrensschritt unmittelbar eingesetzt werden konnte.

In Fig. 2 ist eine alternative Verfahrensführung gezeigt, in welcher die Bezugszeichen von Fig.1 soweit als möglich beibehalten sind und welche im Wesentlichen mit jener von Fig. 1 übereinstimmt, jedoch das gebildete DMS kontinuierlich abgezogen wird und über Leitung 13 in ein Oxidationsverfahren 14 eingebracht wird, in welchem es zu H₂SO₄ bzw. SO₂ sowie CO₂ und H₂O umgesetzt wird. Diese starke gebildete Mineralsäure wird unmittelbar über Leitung 15 in die zweite Fällungsstufe 9 eingeführt und es erübrigt sich somit der externe Zusatz von Schwefelsäure zum zweiten Fällungsschritt. Bei der Verfahrensführung gemäß Fig. 2 sind die pH-Werte im System, insbesondere in den einzelnen Verfahrensschritten gleich wie in Fig. 1 und auch die Ausbeuten unterscheiden sich im Prinzip nicht Prinzipiell ist bei einer derartigen Verfahrensführung jedoch gewährleistet, dass die gebildeten Gase im Kreislauf geführt werden, so dass die Schwefelbilanz im System konstant ist und insbesondere ein übermäßiger Eintrag von Mineralsäure in das System hintangehalten werden kann.

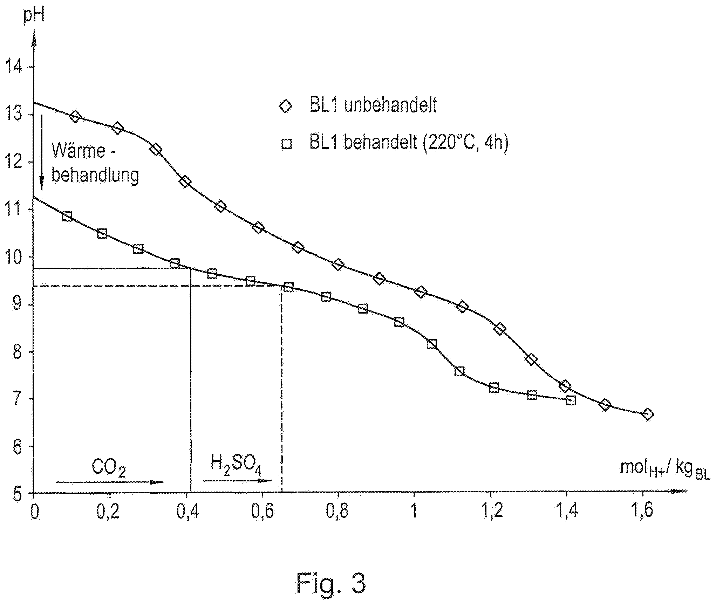

im Diagramm von Fig. 3 ist gezeigt dass mit der Wärmebehandlung gemäß der vorliegenden Erfindung in dem Wärmebehandlungsschritt der pH-Wert der eingesetzten Schwarzlauge deutlich abgesenkt werden kann, und auch in den Fällungsstufen der pH-Wert allein durch Zusatz von den im System vorhandenen CO₂ und H₂SO₄ weiter abgesenkt werden kann und der Gesamtbedarf an H⁺ Ionen pro kg Schwarzlauge gegenüber ihrer nicht wärmebehandelten Schwarzlauge deutlich abgesenkt werden kann.

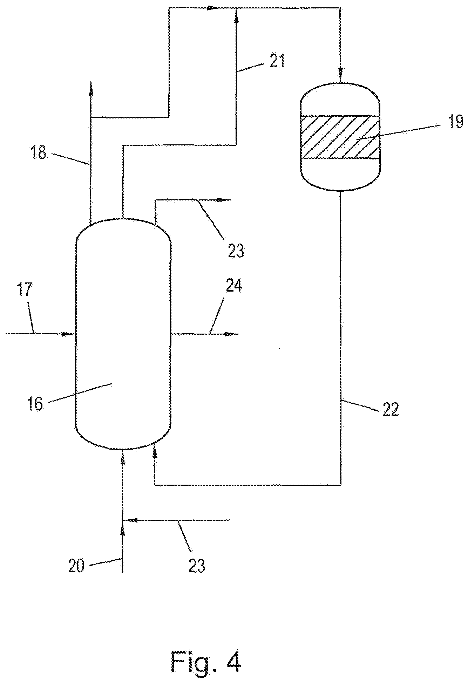

In Fig. 4 ist eine weitere Ausbildung des Verfahrens zum Demethylieren von Lignin gemäß der Erfindung gezeigt, in welchem das Verfahren in einem chargenweisen Reaktor 16 durchgeführt wird. In einem ersten Schritt wird in dem chargenweisen Reaktor 16 die Wärmebehandlung durchgeführt indem über Leitung 17 rohe Schwarzlauge mit einem pH von etwa 13 in den Reaktor 16 eingetragen wird. Im Inneren des Wärmebehandlungsreaktors 16 wird die Schwarzlauge für eine Zeit von etwa 100 min auf 215 °C bis 225 °C erhitzt und das während diesem Erhitzen gebildete Dimethylsulfid (DMS) wird über Leitung 18 wiederholt abgezogen. Gegebenenfalls kann das DMS, wie dies allgemein bekannt ist, einer Oxidationsreaktion zugeführt werden und zu SO₂ aufoxidiert werden, wie dies schematisch mit dem Reaktor 19 angedeutet ist. Durch das Abziehen von DMS aus der Schwarzlauge, die sich in dem Reaktor 16 befindet, verringert sich der Gesamtschwefelgehalt der im Reaktor 16 verbliebenen Schwarzlauge. Der Schritt des Abziehens von DMS wird entweder kontinuierlich oder stufenweise jeweils nach Übersteigen eines bestimmten Grenzdrucks, der in Abhängigkeit von einer Temperatur von etwa 200 bis 225 °C, insbesondere 215 bis 225 °C zwischen etwa 15 und etwa 28 Bar, insbesondere 20 bis 28 Bar liegt, durchgeführt. Nach diesem Wärmebehandlungsschritt wird als zweiter Reaktionsschritt dem Reaktor 16 über die Leitung 20 CO₂ und Abgas zugeführt, wodurch ein erster Fällungsschritt in dem Reaktor 16 stattfindet. Bei diesem Fällungsschritt freigesetzter Schwefelwasserstoff wird über Leitung 21 abgezogen und kann entweder ebenfalls einer Oxidation im Behälter 19 zugeführt werden oder anderwärtig verarbeitet werden. Das Abziehen von H₂S verringert den Schwefelgehalt der im Reaktor verbliebenen Schwarzlauge und erhöht gleichzeitig nach Oxidation in dem Behälter 19 die Ausbeute an SO₂ und H₂SO₄. Das in der Oxidation entstandene SO₂ oder H₂SO₄ wird nun in einem dritten Schritt über Leitung 22 wiederum in den Reaktor 16 rückgeführt, wobei, sollte nicht ausreichendes SO₂ oder H₂SO₄ zur Verfügung stehen, dies auch aus einer externen Quelle bereitgestellt werden kann. Bei Reaktion mit der im Reaktor 16 verbliebenen Schwarzlauge mit SO₂ bzw. H₂SO₄ wird eine zweite Ligninfällung durchgeführt, das hierbei gebildete Abgas, nämlich H₂S und CO₂, welches aus der Verschiebung des Karbonatgleichgewichts stammt, wird bei Leitung 23 aus dem Reaktor 16 abgezogen. Das Abgas kann hierbei entweder gespeichert werden oder aber bei der nächsten Reaktionscharge in dem Reaktor 16 während des oben beschriebenen zweiten Schritts einer ersten Fällung von Lignin wiederum eingesetzt werden. Nach Beendigung der drei beschriebenen Reaktionsschritte wird die im Reaktor 16 gebildete demethylierte Ligninsuspension, welche nunmehr einen pH von etwa 9 aufweist, über Leitung 24 aus dem Reaktor 16 abgezogen. Der Reaktor 16 steht dann für einen neuen Durchlauf zur Verfügung. In diesem Zusammenhang muss festgehalten werden, dass die Reihenfolge der Schritte, nämlich 1. Wärmebehandlung, 2. erste Fällung durch Zugabe von CO₂ und zweite Fällung durch Zugabe von SO₂ auch wenigstens teilweise umgedreht werden kann, nämlich 1, Wärmebehandlung, 2. Fällung mit SO₂ oder H₂SO₄ und zweite Fällung mit CO₂, ohne dass sich an der bei der Reaktion erhaltenen Ligninsuspension etwas ändert.

## Patentansprüche

1. Verfahren zur Abtrennung von Lignin und flüchtigen Reaktionsprodukten, wie DMS von aus einer Zellstoffproduktion stammenden Schwarzlauge, bei welchem in einem Wärmebehandlungsreaktor (2) in der Schwarzlauge enthaltenes Lignin demethyliert wird und von dem Lignin abgetrennte CH₃⁺ Ionen mit reduzierten schwefelhaltigen Komponenten aus in der Schwarziauge enthaltenen Kochchemikalien zu DMS umgesetzt werden und DMS aus dem Wärmebehandlungsreaktor (2) abgezogen wird, **dadurch gekennzeichnet, dass** ein Druckanstieg in dem Wärmebehandlungsreaktor (2) kontrolliert wird und DMS sowie gegebenenfalls weitere flüchtige bzw. gasförmige Reaktionsprodukte bei Erreichen eines Drucks von ≥ 15 Bar bis etwa ≤ 40 Bar, vorzugsweise ≤ 30 Bar in dem Wärmebehandlungsreaktor (2) aus diesem gegebenenfalls wiederholt abgezogen werden, dass die an DMS sowie gegebenenfalls weiteren flüchtigen Reaktionsprodukten verarmte Schwarzlauge in eine erste Fällungsstufe (5) überführt wird und mit CO₂ und/oder schwefelhaltigen Reaktionsprodukten zur Ausfällung eines demethyliertes Lignin enthaltenden Schlamms beaufschlagt wird, dass der demethyliertes Lignin enthaltende Schlamm in einer zweiten Fällungsstufe (9) mit wenigstens einem schwefelhaltigen Ansäuerungsmittel versetzt wird und dass der ausgefälltes rohes demethyliertes Lignin enthaltende Schlamm aus der zweiten Fällungsstufe (9) ausgetragen und einer Abtrennung von demethyliertem Lignin zugeführt wird sowie wenigstens ein Teil der abgezogenen weiteren flüchtigen Reaktionsprodukte, insbesondere schwefelhaltigen Reaktionsprodukte in das Verfahren rückgeführt werden.

2. Verfahren nach Anspruch 1, **dadurch gekennzeichnet, dass** die flüchtigen Reaktionsprodukte der Wärmebehandlung, insbesondere DMS kontinuierlich aus der Wärmebehandlung abgezogen werden.

3. Verfahren nach Anspruch 1 oder 2, **dadurch gekennzeichnet, dass** aus dem Wärmebehandlungsreaktor (2) sowie der ersten Fällungsstufe (5) abgezogene Abgase, insbesondere schwefelhaltige Abgase, wie DMS und H₂S nach einer Oxidation gebildete Produkte wie H₂SO₄, gegebenenfalls SO₂ sowie CO₂ und H₂O als Ansäuerungsmittel der zweiten Fällungsstufe (9) zugeführt werden.

4. Verfahren nach Anspruch 1, 2 oder 3, **dadurch gekennzeichnet, dass** aus der zweiten Fällungsstufe (9) abgezogenes Abgas enthaltend CO₂ und gegebenenfalls H₂S als Ansäuerungsmittel der ersten Fällungsstufe (5) zugeführt wird.

5. Verfahren nach einem der Ansprüche 1 bis 4, **dadurch gekennzeichnet, dass** die Demethylierung von Lignin im Wärmebehandlungsreaktor (2) bei Temperaturen über 180 °C, vorzugsweise über 200 °C, insbesondere bei oder über 220 °C durchgeführt wird.

6. Verfahren nach einem der Ansprüche 1 bis 5, **dadurch gekennzeichnet, dass** die Demethylierung von Lignin in den Wärmebehandlungsbehälter (2) mit einer kontinuierlichen Temperaturerhöhung durchgeführt wird.

7. Verfahren nach Anspruch 6, **dadurch gekennzeichnet, dass** eine Wärmebehandlung für eine Zeitdauer von wenigstens 50 Minuten, vorzugsweise größer 1 Stunde, besonders bevorzugt etwa 2 Stunden und insbesondere etwa 4 Stunden durchgeführt wird.

8. Verfahren nach Anspruch 6 oder 7, **dadurch gekennzeichnet, dass** bei der Wärmebehandlung gebildetes DMS sowie gegebenenfalls gebildete weitere flüchtige Reaktionsprodukte kontinuierlich abgezogen werden.

9. Verfahren nach einem der Ansprüche 1 bis 8, **dadurch gekennzeichnet, dass** aus der ersten und zweiten Fällungsstufe (5, 9) abgezogenes H₂S einer gemeinsamen Oxidationsstufe zugeführt wird.

## Claims

1. A process for separating lignin and volatile reaction products such as DMS from a black liquor deriving from pulp production, in which lignin contained in the black liquor is demethylated in a heat treatment reactor (2) and CH₃⁺ ions separated out of the lignin are reacted with reduced sulphur-containing components from cooking chemicals contained in the black liquor to form DMS and DMS is withdrawn from the heat treatment reactor (2), **characterized in that** a rise in pressure in the heat treatment reactor (2) is controlled and DMS as well as other possible volatile or gaseous reaction products are withdrawn therefrom, repeatedly where necessary, when a pressure of ≥ 15 bar to approximately ≤ 40 bar, preferably ≤ 30 bar, is reached in the heat treatment reactor (2), **in that** the black liquor which is depleted in DMS as well as other possible volatile reaction products is transferred to a first precipitation stage (5) and CO₂ and/or sulphur-containing reaction products are added in order to precipitate out a slurry containing demethylated lignin, **in that** the slurry containing demethylated lignin is transferred into a second precipitation stage (9) with at least one sulphur-containing acidifying agent and **in that** the precipitated crude slurry containing demethylated lignin is discharged from the second precipitation stage (9) and supplied to a demethylated lignin separation step and also at least a portion of the withdrawn other volatile reaction products, in particular sulphur-containing reaction products, is recycled to the process.

2. The process as claimed in claim 1, **characterized in that** the volatile reaction products from the heat treatment, in particular DMS, are continuously withdrawn from the heat treatment step.

3. The process as claimed in claim 1 or claim 2, **characterized in that** off-gases withdrawn from the heat treatment reactor (2) as well as from the first precipitation stage (5), in particular sulphur-containing off-gases such as DMS and H₂S, products such as H₂SO₄ formed after an oxidation step, SO₂ where applicable, as well as CO₂ and H₂O, are supplied to the second precipitation stage (9) as an acidifying agent.

4. The process as claimed in claim 1, claim 2 or claim 3, **characterized in that** off-gas containing CO₂ and possibly H₂S withdrawn from the second precipitation stage (9) is supplied to the first precipitation stage (5) as an acidifying agent.

5. The process as claimed in one of claims 1 to 4, **characterized in that** the demethylation of lignin is carried out in the heat treatment reactor (2) at temperatures of over 180°C, preferably over 200°C, in particular at or over 220°C.

6. The process as claimed in one of claims 1 to 5, **characterized in that** the demethylation of lignin is carried out in the heat treatment vessel (2) with a continuous rise in the temperature.

7. The process as claimed in claim 6, **characterized in that** a heat treatment is carried out for a time period of at least 50 minutes, preferably more than 1 hour, particularly preferably approximately 2 hours and in particular approximately 4 hours.

8. The process as claimed in claim 6 or 7, **characterized in that** DMS formed during the heat treatment as well as other possible volatile reaction products which are formed are withdrawn continuously.

9. The process as claimed in one of claims 1 to 8, **characterized in that** H₂S withdrawn from the first and second precipitation stages (5, 9) is supplied to a common oxidation stage.

## Revendications

1. Procédé pour séparer de la lignine et des produits de réaction volatils tels que du DMS de liqueur noire provenant d'une production de cellulose, dans lequel la lignine contenue dans la liqueur noire est déméthylée dans un réacteur de traitement thermique (2) et les ions CH₃⁺ séparés de la lignine sont transformés avec des composants soufrés réduits provenant de produits chimiques de cuisson contenus dans la liqueur noire en DMS, et le DMS est extrait du réacteur de traitement thermique (2), **caractérisé en ce qu'**une augmentation de pression dans le réacteur de traitement thermique (2) est contrôlée, et lorsqu'une pression ≥ 15 bar à ≤ 40 bar, préférentiellement ≤ 30 bar, est atteinte dans le réacteur de traitement thermique (2), le DMS, ainsi que d'autres produits de réaction volatils ou gazeux le cas échéant, sont extraits de celui-ci, le cas échéant de manière répétée, que la liqueur noire appauvrie en DMS, ainsi qu'en d'autres produits de réaction volatils le cas échéant, est transférée dans un premier étage de précipitation (5) et est exposée à du CO₂ et/ou à des produits de réaction soufrés pour la précipitation d'une boue contenant une lignine déméthylée, que la boue contenant de la lignine déméthylée est mélangée dans un deuxième étage de précipitation (9) avec au moins un acidifiant soufré, et que la boue contenant de la lignine déméthylée brute précipitée est évacuée du deuxième étage de précipitation (9) et amenée vers une séparation de lignine déméthylée, et une partie au moins des autres produits de réaction volatils extraits, en particulier des produits de réaction soufrés, est remise en circulation dans le procédé.

2. Procédé selon la revendication 1, **caractérisé en ce que** les produits de réaction volatils du traitement thermique, en particulier le DMS, sont extraits de manière continue du traitement thermique.

3. Procédé selon la revendication 1 ou 2, **caractérisé en ce que** les gaz émis extraits du réacteur de traitement thermique (2) ainsi que du premier étage de précipitation (5), en particulier les gaz émis soufrés, comme le DMS et H₂S, des produits formés après oxydation tels que H₂SO₄, le cas échéant SO₂, ainsi que CO₂ et H₂O sont amenés en tant qu'acidifiants au deuxième étage de précipitation (9).

4. Procédé selon la revendication 1, 2 ou 3, **caractérisé en ce que** le gaz émis contenant du CO₂ et extrait du deuxième étage de précipitation (9) et le cas échéant H₂S sont amenés en tant qu'acidifiants au premier étage de précipitation (5).

5. Procédé selon l'une des revendications 1 à 4, **caractérisé en ce que** la déméthylation de la lignine dans le réacteur de traitement thermique (2) est réalisée à des températures de plus de 180°C, préférentiellement de plus de 200°C, en particulier à 220°C ou plus.

6. Procédé selon l'une des revendications 1 à 5, **caractérisé en ce que** la déméthylation de la lignine dans le réacteur de traitement thermique (2) est réalisée avec une augmentation de température continue.

7. Procédé selon la revendication 6, **caractérisé en ce qu'**un traitement thermique est réalisé pendant une durée d'au moins 50 minutes, préférentiellement de plus de 1 heure, particulièrement préférentiellement d'environ 2 heures et en particulier d'environ 4 heures.

8. Procédé selon la revendication 6 ou 7, **caractérisé en ce que** le DMS formé lors du traitement thermique, ainsi que les autres produits de réaction volatils formés le cas échéant, sont extraits de manière continue.

9. Procédé selon l'une des revendications 1 à 8, **caractérisé en ce que** le H₂S extrait des premier et deuxième étages de précipitation (5, 9) est amené à un étage d'oxydation commun.
